# EUROPEAN PATENT SPECIFICATION

(11) **EP 3 645 928 B1**
(45) Date of publication and mention of the grant of the patent: **09.08.2023**
(21) Application number: 18822981.9
(22) Date of filing: 19.06.2018
(51) Int. Cl.: F16L 55/07, E03B 7/08

(54) **DEVICE FOR DRAINING OR REMOVING WATER FROM A CIRCULAR WATER PIPE AND ITS USE**
VORRICHTUNG ZUM ABLEITEN ODER ENTFERNEN VON WASSER AUS EINEM WASSERROHR MIT KREISFÖRMIGEM QUERSCHNITT SOWIE IHRE VERWENDUNG
DISPOSITIF DE DRAINAGE OU D'ÉVACUATION D'EAU D'UN TUYAU D'EAU CIRCULAIRE ET SON UTILISATION

(30) Priority: 27.06.2017 SE 1750829
(43) Date of publication of application: 06.05.2020
(73) Proprietor: Werme Patent AB, 754 35 Uppsala (SE)
(72) Inventor: WERME, Isak, 753 34 Uppsala (SE); WERME, Martin, 754 35 Uppsala (SE)
(74) Representative: AWA Sweden AB
(86) International application number: PCT/SE2018/050646
(87) International publication number: WO 2019/004899

(56) References cited:
- EP-A2- 2 532 293
- WO-A1-89/04628
- AU-A- 2 620 897
- DE-A1-102008 055 043
- FR-A1- 2 604 079
- GB-A- 2 444 196
- GB-A- 2 542 209
- KR-U- 19980 028 714
- US-A- 5 435 478
- US-A- 5 651 393
- US-B1- 6 820 636

## Description

### TECHNICAL FIELD

The proposed technology generally relates to devices for draining or removing water from a water pipe. More specifically it relates to water drainage devices that are adapted to be inserted into a water pipe in order to remove water from particular sections of the pipe to enable work to be performed at the water free regions. The proposed technology also relates to certain components of such a water drainage device.

### BACKGROUND

In order to perform work, e.g. mechanical work, repair work or welding, in a water carrying pipe it is often necessary to remove the water flow from at least sections of the water pipe. A normal procedure to handle the water flow during work in a water carrying pipe is to first close the water flow in a centrally controlled fashion and then try to remove, by means of suction or pumping, any remaining water flow. Since there is always some leakage of water through the pipe valves, even if the general water flow has been closed, the water has to be removed or drained from the pipe in a more or less continuous fashion. One particular problem is to actually reach the residual water flow in order to be able to remove it. One possible way to reach and remove the water flow is to make a hole in the pipe and try to remove the water by means of suction or pumping. This procedure however demands that the pipes are penetrated mechanically, something that is highly unwanted and, in some places, also forbidden. This crude way of reaching and removing the water may moreover not be ideal to ascertain that, if not all so at least a large part, of the water flow is stopped. Some maintenance work may be negatively affected by even minute flows of water, e.g. maintenance work that requires welding.

It is therefore a need within the technical field to provide mechanisms that enables water to be drained or removed from of at least sections of a water carrying pipe in order to make it possible for, e.g., a pipe repair man or a welding operator to perform work in that section without being disturbed by water flows and without having to damage the pipe by, e.g., making a hole in the pipe.

Some prior art documents describe different apparatuses for suction applications.

DE102008055043 describes a multifunctional nozzle for a vacuum cleaner, on which different functional parts for special suction functions are arranged opposite one another, with at least one of the functional parts being displaceable in the axial direction and with the multifunctional nozzle being designed on both sides so that it can be positively plugged onto the suction tube of the vacuum cleaner.

KR19980028714 describes a vacuum cleaner that can remove various foreign substances (gum, etc.) adhering to the floor by using a gap foreign substance removal port of the vacuum cleaner, so that convenience of use and diversification of product functions can be expected.

FR2604079A1 describes a double-action apparatus provided solely for fitted and loose carpets having fibres with a height of more than 4 millimetres on which some liquid would have been deposited or injected. It consists of a tube welded to a box which has openings which forms the first over-suction action.

EP2532293 describes a hose assembly including a hose and a joint member integrated with the hose. The joint member includes an inner unit to be arranged on an inside of the hose. The hose includes a hose main body and a lip. The hose main body includes a groove portion and a protrusion portion formed in a spiral shape on an inner surface thereof.

WO8904628 describes an apparatus for removing, by partial vacuum, particles, liquids etc. from a substrate. The apparatus includes a connection conduit which is common to a plurality of channels, and distributes partial vacuum to the one ends of the channels, the conduit being arranged to be connected to a source of partial vacuum establishing requisite partial vacuum at the one ends of the channels.

GB2542209A representing the closest prior art shows a nozzle for a vacuum pump or truck which may be used to extract solids , such as grit and sand, as well as liquids from a waste water treatment tank. It comprises a rectangular inlet and a straight vacuum conduit.

### SUMMARY

It is a general object of the proposed technology to provide devices that makes it possible to drain or remove water from at least sections of a water carrying pipe.

A more specific object is to provide a device that makes it possible to drain or remove water from at least sections of a water carrying pipe where the device has a design that enables the insertion of the device into already existing pipe seams or pipe joints.

It is another specific object to provide a water drainage device that can be used to drain water from a water carrying pipe to enable an operator to perform work on the pipe in the drained region.

It is another specific object to provide certain components of a water drainage device that will enable the operator to tailor the design of the water drainage device to the particular circumstances dictated by the application or the design of the pipe.

It is yet another object to provide a water drainage device that is suitable to be inserted into a water carrying pipe in order to enable a welding of the pipe without allowing the water flow to negatively influence the welding flame, i.e. cooling the welding flame.

These and other objects are met by embodiments of the proposed technology. The invention is defined by the claims.

According to the invention, there is provided a water drainage device adapted to be inserted into a circular water pipe. The water drainage device comprises a main body that comprises:
a first surface adapted to face the flow of water in the water pipe;
a pipe contacting section having an edge with a shape adapted to lie essentially flush with the inner profile of the water pipe to prohibit water from flowing past the pipe contacting section;
a water inlet arranged in the pipe contacting section and adapted to face the water flow in the water pipe;
a water outlet adapted to be connected to a water removal means;
a water drainage channel, extending through the main body from the water inlet to the water outlet, adapted to enable water to be drained from the water pipe. The main body further comprises a width dimension, between the first surface and a second surface arranged on the opposite side of the first surface, with respect to intended direction of the water flow, which enables the device to be inserted into the water pipe through seams or joints in the water pipe.

The water drainage device further comprises a pipe contacting module comprising an edge with a shape adapted to lie substantially flush with the inner profile of a water pipe to prohibit water from flowing past the pipe contacting section and a water inlet adapted to be connected to a water draining channel of a water drainage device.

The water drainage device further comprises a curved module comprising an upper end adapted to be attached to the upper part of the water drainage device and a lower end adapted to be attached to a lower part of the water drainage device.

According to the invention the use of the water drainage device is proposed in order to obtain a water free region in a water pipe and to thereby enable welding in said water free region.

Embodiments of the proposed invention make it possible to remove a water flow from a pipe in a simple manner in order to create a water free space where maintenance work and other operations on the pipe may be performed.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a schematic drawing illustrating a water drainage device according to a not claimed variant.
FIG. 2 is a schematic drawing illustrating a particular embodiment of a water drainage device according to the invention where the water drainage device comprises a curved midsection.
FIG. 3 is a schematic diagram illustrating the embodiment shown in FIG.2 when inserted into a water pipe.
FIG. 4 is a schematic diagram illustrating the embodiment shown in FIG.2 when inserted into a water pipe. The direction of the water flow is illustrated by means of arrows.
FIG. 5 is an alternative view of the embodiments illustrated in FIGs 2-4.
FIG. 6a is a schematic diagram illustrating the pipe contacting section of a water drainage device according to the invention.
FIG. 6b is a schematic diagram illustrating a curved module to be used as a midsection in a water drainage device according to the invention.
FIG.6c is a schematic diagram illustrating the upper part of a water drainage device. The upper part attaches to a curved module on one end and to a water removal means on the other end.
FIG. 6d is a schematic diagram illustrating a nozzle to be attached at the water outlet of a water drainage device. nozzle will attach to a water removal means.

### DETAILED DESCRIPTION

Throughout the drawings, the same reference designations are used for similar or corresponding elements.

For a better understanding of the invention it may be useful to begin with a brief recollection of the technical problem. When maintenance work is to be done in a pipe carrying a water flow the common procedure is to centrally close the water flow in order to create a dry working area. This may however not be enough since there is always some residual water flow left in the pipes due to, e.g. leakages in valves. Even a small flow of water may be a disturbance to general maintenance work, and in some circumstances it may even make the work impossible, e.g., when welding has to be performed in the pipe. In order to counter this problem mechanisms has to provided that will enable a user to remove the residual water flow from the pipe in order to create a dry working area/spot.

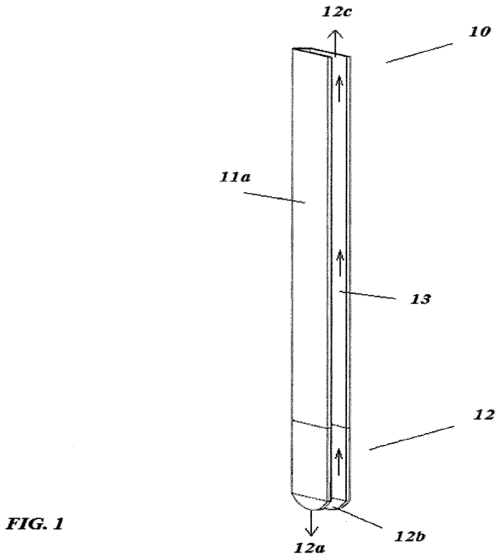

The invention provides such a mechanism by providing a water drainage device that is suitable to use in water pipes to enable an operator or user to obtain a water free section of the pipe where work can be performed. FIG.1 provides a schematic illustration of a water drainage device 1 according to a not aimed variant. Illustrated is a water drainage device that is adapted to be inserted into a water pipe. The water drainage device comprises a main body 10 that comprises a first surface 11a adapted to face the flow of water in the water pipe. The main body 10 further comprises a pipe contacting section 12 having an edge 12a with a shape adapted to lie essentially flush with the inner profile of the water pipe to prohibit water from flowing past the pipe contacting section 12. The main body 10 also comprises a water inlet 12b arranged in the pipe contacting section 12 and adapted to face the water flow in the water pipe. The main body also comprises a water outlet 12c adapted to be connected to a water removal means. The main body 10 also comprises a water drainage channel 13, extending through the main body 10 from the water inlet 12b to the water outlet 12c, adapted to enable water to be drained from the water pipe The main body 10 further comprises a width dimension, between the first surface 11a and a second surface 11b arranged on the opposite side of the first surface, with respect to intended direction of the water flow, which enables the device to be inserted into the water pipe through seams or joints in the water pipe.

The water drainage device provides a dual functionality, an impoundment functionality whereby the water flow is stopped and prohibited from flowing past the device, and a water removal functionality whereby the impounded water is led into a water inlet and removed from the pipe by means of a water removal means.

According to the invention there is provided a water drainage device that is suitable to use for e.g., performing welding in a water pipe. To this end the water drainage device is provided with a curved midsection. The reasons for providing the water drainage device with a curved section are manifold. One particular reason is to obtain a water drainage device where the surface of the main body that is closest to the welding spot is protected from the heat that emanates from the welding. This is achieved by distancing the surface from the welding spot. Another reason for providing a curved section is to ensure that the welding spot is distanced from the water flow in order to reduce the cooling effect from the water which may have a negative impact on the quality of the welding. This is in turn achieved since the region of the water pipe that is directly underneath the curved midsection will be free from water.

According to the invention there is provided a water drainage device where the main body 10 comprises a first part 110, a second part 110 and a third part 120. The first part 100 connects to one end 111 of the second part 110. The second part 110 also comprises a second end 112 that connects to an end 121 of the third part 120 that comprises the pipe contacting section 12. The second part 110 is provided with a curved shape whereby the second end 112 of the middle part 110 is adapted to be arranged further upstream of the water flow than the end 111 of the first part upon inserting the water drainage device 1 into the water pipe. This embodiment is suitable to use in order to obtain a water free section of the pipe in the region underlying the second part 110.

The water drainage device is intended to be inserted into a pipe so that the third part 120, comprising the pipe contacting section 12, of the main body 10 connects to the inside of the pipe at the location where the water flows, i.e., at the lower inside of the pipe with regard to the position of the ground. It is therefore possible to refer to the first part of the main body 10 as the upper part 100, the second part 110 of the main body 10 as the middle part and the third part 120 as the lower part. The upper part 110 thus connects to the middle part at an upper end 111 of the middle part while the lower end 112 of the middle part, opposite the upper end, connects to a corresponding upper end 121 of the lower part.

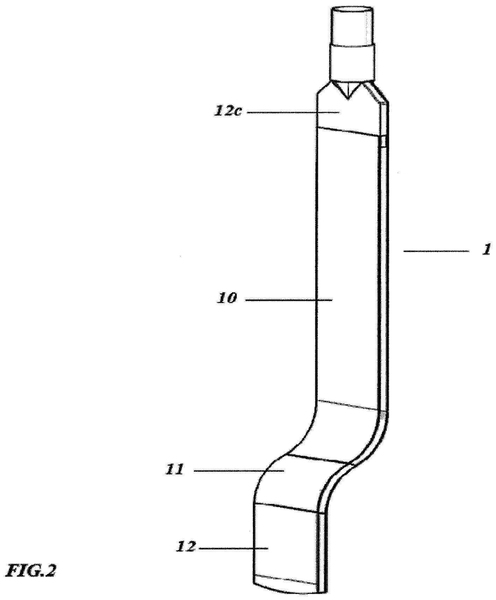

An embodiment of the invention is schematically illustrated in FIG.2. Shown is a water drainage device where the main body 10 comprises an upper part 100, a middle part 110 and a lower part 120. The upper part 100 connects to an upper end 111 of the middle part 110. The middle part 110 also comprises a lower end 112 that connects to an upper end 121 of the lower part 120 that comprises the pipe contacting section 12. The middle part 110 is provided with a curved shape whereby the lower end 112 of the middle part 110 is adapted to be arranged further upstream of the water flow than the upper end 111 upon inserting the water drainage device 1 into the water pipe. The embodiment shown is suitable to use in order to obtain a water free section of the pipe in the region underlying the middle part 110. The water free region will ensure that there is ample distance between the main body and the area where the intended work will take place. This embodiment is, as was stated above, particularly useful for protecting the main body from heat emanating from welding performed at a spot or region in the vicinity of the created water free region of the pipe.

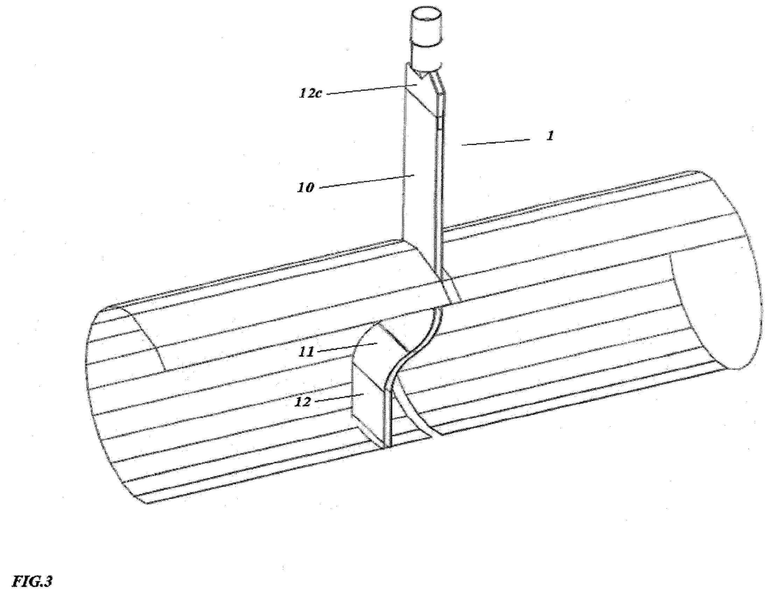

The water drainage device according to the embodiment described above is also particularly useful for providing water drainage in a seamed pipe, i.e. in a water pipe with sections attached to each other by means of pipe seams or joints. These pipe seams or joints often provides a small gap in the pipe where the operator/user may insert the water drainage device. The water drainage device may for example be inserted, through the gap, into the pipe from above and lowered down until the pipe contacting section 12 lies flush with the profile of the pipe. That is, lies flush with the inner surface of the pipe. Since the middle section of the water drainage device may be curved it will be possible for the operator or user to perform e.g. welding in the area lying underneath the curved section. FIG.3 provides a schematic illustration of how a water drainage device according to the embodiment with a curved middle part may be used in a pipe. It is clear from the drawing that a water free region is created behind the pipe contacting section 12 and underneath the curved middle section 11.

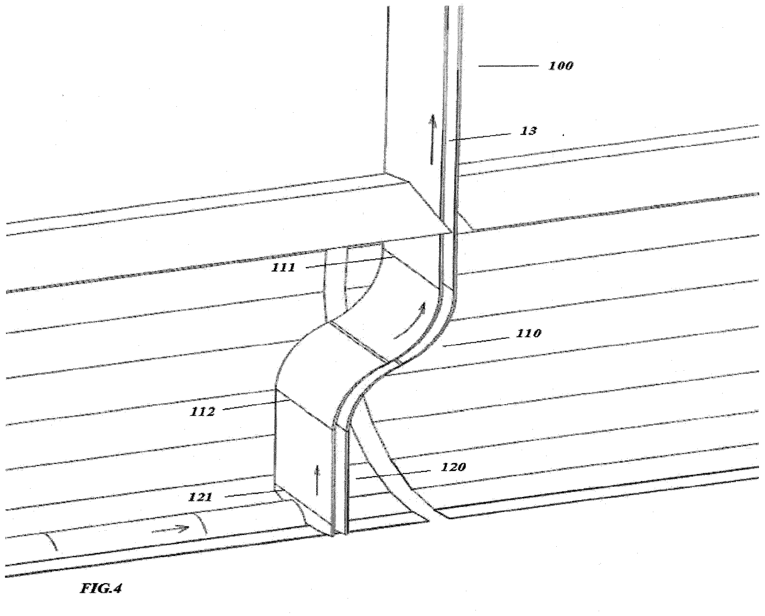

According to the invention, the upper part 100 and the lower part 120 comprise substantially planar surfaces that are arranged to face the direction of the flow of water. The fact that the upper and lower parts are provided in substantially planar shape will simplify the insertion of the device into a gap defined by the seams or joints of the pipe. If the middle section is curved the user may thread the device into the pipe through the gap defined by the pipe seams or joints. A schematic illustration of this embodiment is provided by FIG.4.

Yet another exemplary embodiment provides a water drainage device where the distance, in a direction parallel to the water flow, between the upper end 111 and the lower end 112 of the middle part 110 is at least 10 cm. This particular embodiment ensures a safety distance to the main body when the device is used to e.g. enable welding in the pipe. That is, it ensures that there is a substantial distance between the main body and the welding spot. The safety distance, and thus the distance between the upper end 111 and the lower end 112 of the middle part 110 may of course be altered to fit the particular situation.

All the disclosed embodiments may be provided as a uniformly constructed device, i.e. a device where all the parts, i.e. the first or upper part, the second or middle part and the third or pipe contacting part, are constructed from a single piece or molded or cast in single piece. There are however some particular advantages with having a modular water drainage device. One particular advantage is that the length and/or curvature of the middle part may be varied in order to create different sized regions underneath the curved middle part. To this end there is provided an embodiment of the proposed technology where the water drainage device is a modular water drainage device where the middle part 110 comprises a curved module that is detachably attached to the upper part 100 and the lower part 120. In this way the water drainage device 1 can be fitted with different curved modules that provides different distances between the upper end 111 and the lower end 112. That is, different sized water free regions underneath the curved module may be obtained by using curved modules with different sizes and/or different curvatures. The curved module may be attached to the upper part and lower part with any suitable locking means, such as e.g. a clamp lock or a snap-fit lock. It is also possible to provide the curved module and the upper part/lower part with shapes that enables that one end of the curved module slides over a corresponding end of the upper part/lower part in such a way that they form an overlapping section which provides an interlocking mechanism.

A similar modular water drainage device may be used to provide pipe contacting sections that are tailored to fit with different pipe profiles. An embodiment that allows for this is provided by a water drainage device where the pipe contacting section 12 is a detachable section whereby the water drainage device 1 can be provided with pipe contacting sections 12 having edges 12a that are tailored to different water pipe profiles. The modular pipe contacting section may be attached to the second or middle part with any suitable locking means, such as e.g. a clamp lock or a snap-fit lock. It is also possible to provide the pipe contacting section and the middle section/curved module with shapes that enables that one end of the pipe contacting section slides over a corresponding end of the curved section/module in such a way that they overlap and interlock which provides the locking means.

According to an optional embodiment there is provided a water drainage device where the main body 10 comprises attaching means for attaching the water drainage device 1 to the water pipe. This embodiment ensures that the water drainage device is securely attached to the pipe during use. This will in turn ensure that the operator's hands are free to perform the needed work, e.g. repairing the pipe or welding. The attaching means may for example be a clamp lock. Other attaching means are possible, such as snap-fit means.

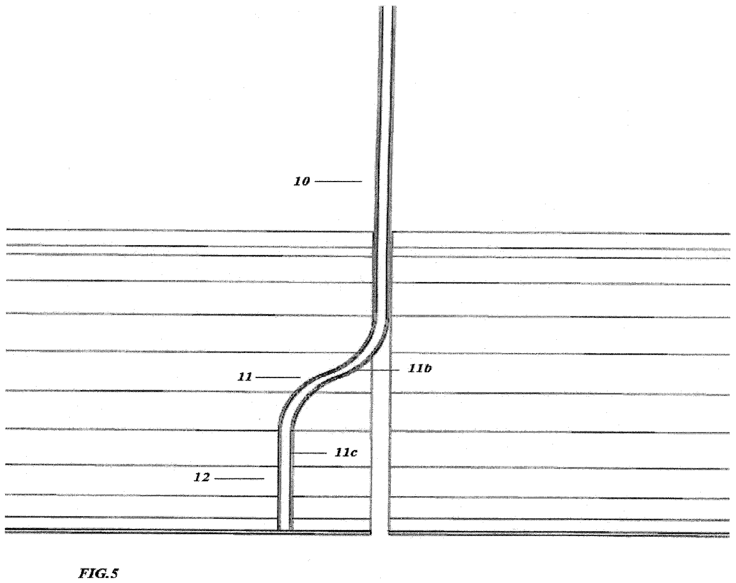

According to the invention, the device comprises a water drainage device 1 where the main body 10 comprises a second surface 11b that is arranged on the opposite side of the first surface 11a, with respect to the intended direction of the water flow in the pipe. According to a preferred embodiment, the second surface comprises a heat resisting material or is covered with a heat resisting layer. The embodiment is schematically illustrated in FIG.5, the layer is however not shown. This embodiment may advantageously be used to enable welding in the water free region created by the device. During use the second surface 11b will be closer to the welding spot, and the heat emerging from the welding flame will heat the second surface and the heat may possibly damage the surface. If, for example, the second surface comprises a plastic material it might melt, or at least degenerate, due to the substantial heat associated with welding. The proposed embodiment therefore provides additional protection against the heat from the welding flame.

The second surface 11b that is arranged on the opposite side of the first surface 11a, with respect to the intended direction of the water flow in the pipe, may in one particular embodiment be comprised as a part of the main body 10 that is produced from a heat resistant material. Another possibility is however to provide the second surface 11b with a layer of a material with beneficial heat resistant characteristics. The water drainage device may in a particular embodiment be produced from a rather inexpensive but robust material, such as a plastic, where the second surface 11b has been provided with a heat resisting layer. One optional version such a heat resisting layer might for example be a ceramic layer.

Another suitable material characteristic is that the material used to produce the water drainage device, or the components thereof, e.g. the middle section or the pipe contacting section, is flexible. The flexibility of the device or the components may simplify the insertion of the device into a water pipe through a minor gap such as a pipe seam or joint.

According to yet another embodiment of the proposed water drainage device, the device may comprise water removal means connected to the water outlet 12c and being adapted to remove water from the water pipe through the water transferring channel 13 extending through the main body 10 from the water inlet 12b to the water outlet 12c. By way of example, the water removal means may be a water pump or a water suction device, such as a vacuum suction device. The water removal means are not necessarily part of the water drainage device, the water drainage device may instead comprise connection means for connecting the water outlet arranged in the main body with an external water removal means.

In order to enable the insertion of the water drainage device in a pipe through pipe seams or joints, the main body 10 of the water drainage device may be provided with a width dimension, defined by the extension or distance between the first surface 11a and a second surface 11b arranged on the opposite side of the first surface, with respect to intended direction of the water flow, that enables the device to be inserted into the water pipe through small gaps such as seams or joints in the water pipe. The width dimension may for example range between approximately 2 mm and 12 mm. Other dimensions are however possible and the choices may be made in light of the actual size of the gaps, pipe seams or joints.

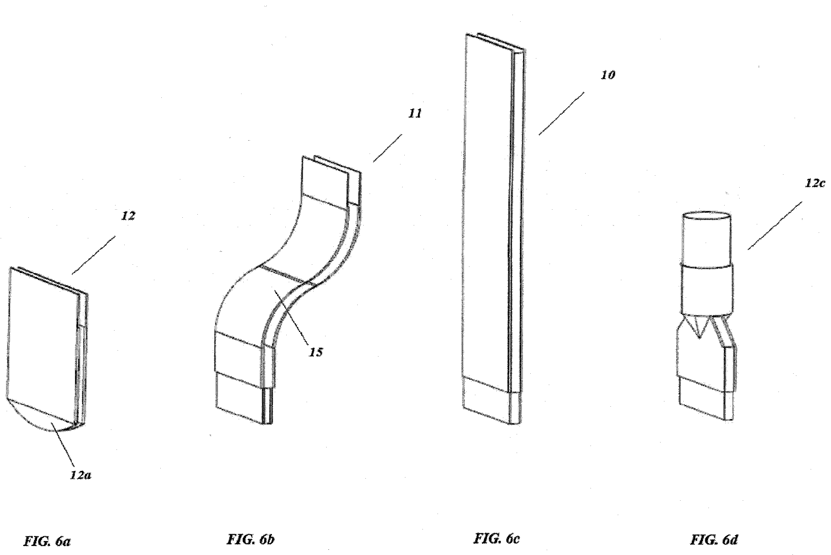

The various parts of the water drainage device are schematically illustrated in FIGs 6a-6d. FIG.6a illustrate the pipe contacting section 12 with a pipe contacting edge 12a that is adapted to lie flush with the profile of the inner surface of a pipe. FIG.6b illustrates the middle part, or middle section, 11 with a curved portion 15. FIG.6c provides a schematic illustration of the shape of the main body 10 of a water drainage device, with a non-curved middle section. FIG. 6d illustrates, schematically a water outlet provided with a nozzle that is adapted to be connected to a water removal means.

As was briefly mentioned earlier, the proposed water drainage device may be provided in module form, i.e. in a form where one or several parts can be assembled in order to obtain the water drainage device. The module parts may for example be a module having a shape that corresponds to the pipe contacting section 12 of the assembled water drainage device. An advantage obtained with such a module is that the size and shape of the module may be adapted to fit different sized pipes with different shape pipe profiles. To this end the proposed technology also provides a pipe contacting module 12 to be fitted on a water drainage device 1 according to what has been described. The pipe contacting module 12 comprises an edge 12a with a shape adapted to lie essentially flush with the inner profile of a water pipe to prohibit water from flowing past the pipe contacting section 12 and a water inlet 12b adapted to be connected to the water draining channel 13 of the water drainage device 1. The pipe contacting module 12 may be provided with attaching means for attaching the module to the water drainage device main body, i.e. be attached to a midsection of the water drainage device, e.g. a curved section 11. By way of example, the attaching means may be a clamp lock or a snap-fit, other detachable locking mechanisms may however be used.

Another particular module corresponds to the second or middle part 110 of the earlier described water drainage device. One advantage obtained with a detachable module corresponding to the second or middle part is that the curvature and size of such a module may be tailored for the particular application. One may for example select a module with a particular curvature and size to obtain a large water free region underneath the module. Such a large region may for example be beneficial if the user intends to weld in the vicinity of the water free region. By distancing the water flow from the welding spot any cooling influence on the welding flame, from the water, may be reduced. To this end the proposed technology provides a curved module adapted to be attached to a water drainage device 1 according to what has been described, the curved module comprises a first end, or an upper end 111, adapted to be attached to the first or upper part of the water drainage device and a second end, or lower end, 112 adapted to be attached to the third or lower part 120 of the water drainage device. The curved module should enclose a water transferring channel that connects to a corresponding water transferring channel in the third, or lower part, 120 that is, a water transferring channel in the pipe contacting section or module, and also to a water transferring channel arranged in the first or upper part 100 of the water drainage device in order to be able to remove the water from the pipe. The first or upper part 100 of the water drainage device also comprises, in this embodiment, the water outlet connecting to a water removal means.

The main body 10 of the water drainage device describe in any of the earlier embodiments may be provided with an elliptically shaped cross-section, as viewed from an end of the device. Having a cross-section with such a tapered shape may simplify the insertion of the device into e.g. a pipe seam or joint.

Another particular embodiment provides a water drainage device according to any of the earlier described embodiments where the surface facing the working region, see e.g. surface 11b and/or 11c in FIG. 5, may be provided with illumination means in order to provide the user with some light in the working area. By way of example, the main body may comprise illuminating means in the form of a light emitting diode arranged on the surface 11b. The light emitting diode may either be connected, by means of wires, to a power source, e.g. a battery, provided in the water drainage device or be connected to an external power source. The diode may be provided in an open ended cavity provided in the surface 11b where the cavity provides some protection to the diode against mechanical impacts, e.g. when inserting the device into the pipe. The wires connecting the diode to the power source could in one embodiment be built into the main body and in another embodiment be provided on the outside of the main body. The wires may for example be provided on the surface 11b, possibly in recesses provided on the surface in order to protect the wires.

The illuminating means may also be provided on any of the proposed modules, i.e. the curved module or the pipe contacting module described earlier.

The invention also provides a use of a water drainage device 1 according to what has been describe earlier in order to obtain a water free region in a water pipe and thereby enabling welding in the water free region.

The use of a water drainage device may prove particularly beneficial for providing a water free region in order to enable welding work in the water free region created by the device. Consider the particular example when maintenance work including welding needs to be done to a particular section of a water pipe with seams or joints. The proposed water drainage device may be inserted into an opened pipe seam or pipe joint in order to create a water free region. Maintenance work may then be performed in the water free region. The open pipe seam or pipe joint may then be welded together to close the pipe. Maintenance work can at a later stage be performed again by opening up the joint or seam and inserting the device. The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. A water drainage device adapted to be inserted into a circular water pipe, said water drainage device comprising a main body (10) comprising:
- a first surface (11a) adapted to face the flow of water in said circular water pipe;
- a pipe contacting section (12) having an edge (12a) with a shape adapted to lie substantially flush with the inner profile of said circular water pipe to prohibit water from flowing past said pipe contacting section (12);
- a water inlet arranged in said pipe contacting section (12) and adapted to face the water flow in said circular water pipe;
- a water outlet (12c) adapted to be connected to a water removal means;
- a first part (100), connecting to a first end (111) of a second part (110), said second part (110) further comprising a second end (112) connecting to a first end (121) of a third part (120) comprising said pipe contacting section (12), said second part (110) having a curved shape whereby the second end (112) of said second part (110) is adapted to be arranged further upstream of said water flow than said first end (111) upon inserting said water drainage device; wherein said first part (100) and said third part (120) comprises substantially planar surfaces arranged to face the direction of the flow of water; wherein said first part (100) and said third part (120) are adapted to face the flow of water in said circular water pipe and their length extensions are adapted to be arranged substantially perpendicular to said water flow and/or circular water pipe;
- a water drainage channel (13), extending through the main body (10) from the water inlet to the water outlet (12c), adapted to enable water to be drained from said circular water pipe, said main body (10) further comprising a width dimension, between the first surface (11a) and a second surface (11b) arranged on the opposite side of the first surface (11a), with respect to intended direction of the water flow, that enables the device to be inserted into the circular water pipe through open seams or open joints in said circular water pipe.

2. The water drainage device according to claim 1, wherein the distance, in a direction parallel to the water flow, between said first end (111) and said second end (112) of said second part (110) is at least 10 cm.

3. The water drainage device according to any of the claims 1 or 2, wherein said second part (110) comprises a curved module (15) adapted to be detachably attached to said first part (100) and said third part (120), whereby said water drainage device (1) can be fitted with different curved modules (15) providing different distances between said first end (111) and said second end (112).

4. The water drainage device according to any of the claims 1-3, wherein said pipe contacting section (12) is a detachable section whereby said water drainage device (1) can be provided with pipe contacting sections (12) having edges (12a) that are tailored to different sized circular water pipe profiles.

5. The water drainage device according to any of the claims 1-4, wherein said main body (10) comprises attaching means for attaching said water drainage device (1) to said circular water pipe.

6. The water drainage device according to any of the claims 1-5, further comprising water removal means connected to said water outlet (12c) and adapted to remove water from said circular water pipe through said water transferring channel (13) extending through the main body (10) from the water inlet to said water outlet (12c).

7. The water drainage device according to any of the claims 1-6, wherein said width dimension ranges between approximately 2 mm and 12 mm.

8. Use of a water drainage device (1) according to any of the claims 1-7 to obtain a water free region in a circular water pipe and thereby enabling welding in said water free region.

## Patentansprüche

1. Wasserableitungsvorrichtung, die dazu geeignet ist, in ein kreisförmiges Wasserrohr eingesetzt zu werden, wobei die Wasserableitungsvorrichtung einen Hauptkörper (10) umfasst, welcher umfasst:
- eine erste Oberfläche (11a), die dazu geeignet ist, dem Strom von Wasser im kreisförmigen Wasserrohr zugekehrt zu sein;
- eine Rohrkontaktsektion (12), die eine Kante (12a) mit einer Form aufweist, welche dazu geeignet ist, im Wesentlichen bündig mit dem Innenprofil des kreisförmigen Wasserrohrs zu liegen, um zu verhindern, dass Wasser an der Rohrkontaktsektion (12) vorbeiströmt;
- einen Wassereinlass, der in der Rohrkontaktsektion (12) angeordnet ist und dazu geeignet ist, dem Wasserstrom im kreisförmigen Wasserrohr zugekehrt zu sein;
- einen Wasserauslass (12c), der dazu geeignet ist, mit einem Wasserentfernungsmittel verbunden zu sein;
- ein erstes Teil (100), das mit einem ersten Ende (111) eines zweiten Teils (110) verbindet, wobei das zweite Teil (110) ferner ein zweites Ende (112) umfasst, das mit einem ersten Ende (121) eines dritten Teils (120) verbindet, welches die Rohrkontaktsektion (12) umfasst, wobei das zweite Teil (110) eine gekrümmte Form aufweist, wodurch das zweite Ende (112) des zweiten Teils (110) dazu geeignet ist, weiter stromaufwärts zum Wasserstrom als das erste Ende (111) nach dem Einsetzen der Wasserableitungsvorrichtung angeordnet zu sein; wobei das erste Teil (100) und das dritte Teil (120) im Wesentlichen plane Oberflächen umfassen, die dazu angeordnet sind, der Richtung des Stroms von Wasser zugekehrt zu sein; wobei das erste Teil (100) und das dritte Teil (120) dazu geeignet sind, dem Strom von Wasser im kreisförmigen Wasserrohr zugekehrt zu sein, und ihre Längenausdehnungen dazu geeignet sind, im Wesentlichen senkrecht zum Wasserstrom und/oder zum kreisförmigen Wasserrohr angeordnet zu sein;
- einen Wasserableitungskanal (13), der durch den Hauptkörper (10) vom Wassereinlass zum Wasserauslass (12c) verläuft und zum Ermöglichen geeignet ist, dass Wasser aus dem kreisförmigen Rohr abgeleitet wird, wobei der Hauptkörper (10) ferner eine Breitenabmessung zwischen der ersten Oberfläche (11a) und einer zweiten Oberfläche (11b), welche auf der gegenüberliegenden Seite der ersten Oberfläche (11a) angeordnet ist, bezüglich der beabsichtigten Richtung des Wasserstroms umfasst, die es ermöglicht, dass die Vorrichtung durch offene Fugen oder offene Verbindungsstellen im kreisförmigen Wasserrohr in das kreisförmige Wasserrohr eingesetzt wird.

2. Wasserableitungsvorrichtung nach Anspruch 1, wobei der Abstand, in einer parallel zum Wasserstrom verlaufenden Richtung, zwischen dem ersten Ende (111) und dem zweiten Ende (112) des zweiten Teils (110) zumindest 10 cm beträgt.

3. Wasserableitungsvorrichtung nach einem der Ansprüche 1 oder 2, wobei das zweite Teil (110) ein gekrümmtes Modul (15) umfasst, das dazu geeignet ist, abnehmbar am ersten Teil (100) und am dritten Teil (120) angebracht zu sein, wodurch die Wasserableitungsvorrichtung (1) mit verschiedenen gekrümmten Modulen (15) ausgestattet werden kann, die verschiedene Abstände zwischen dem ersten Ende (111) und dem zweiten Ende (112) vorsehen.

4. Wasserableitungsvorrichtung nach einem der Ansprüche 1 bis 3, wobei die Rohrkontaktsektion (12) eine abnehmbare Sektion ist, wodurch die Wasserableitungsvorrichtung (1) mit Rohrkontaktsektionen mit Kanten (12a) versehen werden kann, welche auf kreisförmige Wasserrohrprofile verschiedener Größe zugeschnitten sind.

5. Wasserableitungsvorrichtung nach einem der Ansprüche 1 bis 4, wobei der Hauptkörper (10) Anbringungsmittel zum Anbringen der Wasserableitungsvorrichtung (1) am kreisförmigen Wasserrohr umfasst.

6. Wasserableitungsvorrichtung nach einem der Ansprüche 1 bis 5, ferner umfassend Wasserentfernungsmittel, die mit dem Wasserauslass (12c) verbunden sind und dazu geeignet sind, Wasser aus dem kreisförmigen Wasserrohr durch den Wasserüberführungskanal (13), der durch den Hauptkörper (10) vom Wassereinlass zum Wasserauslass (12c) verläuft, zu entfernen.

7. Wasserableitungsvorrichtung nach einem der Ansprüche 1 bis 6, wobei die Breitenabmessung zwischen ungefähr 2 mm und 12 mm liegt.

8. Verwendung einer Wasserableitungsvorrichtung (1) nach einem der Ansprüche 1 bis 7 zum Erzielen eines wasserfreien Bereichs in einem kreisförmigen Wasserrohr und dadurch Ermöglichen von Schweißen im wasserfreien Bereich.

## Revendications

1. Un dispositif de drainage d'eau adapté pour être inséré dans un tuyau d'eau circulaire, ledit dispositif de drainage d'eau comprenant un corps principal (10) comprenant :
- une première surface (11a) adaptée pour être en face du flux d'eau dans ledit tuyau d'eau circulaire ;
- une section en contact avec le tuyau (12) comportant un bord (12a) ayant une forme adaptée de manière à être sensiblement à fleur du profil intérieur dudit tuyau d'eau circulaire, afin d'empêcher l'eau de s'écouler au-delà de ladite section en contact avec le tuyau (12)
- un orifice d'admission d'eau aménagé dans ladite section en contact avec le tuyau (12) et adapté pour être en face du flux d'eau dans ledit tuyau d'eau circulaire ;
- un orifice de sortie d'eau (12c) adapté pour être raccordé à un dispositif d'évacuation d'eau ;
- une première partie (100) raccordée à une première extrémité (111) d'une seconde partie (110), ladite seconde partie (110) comprenant en outre une seconde extrémité (112) raccordée à une première extrémité (121) d'une troisième partie (120) comprenant ladite section en contact avec le tuyau (12), ladite seconde partie (110) ayant une forme courbe, de telle sorte que la seconde extrémité (112) de ladite seconde partie (110) est adaptée pour être arrangée plus loin en aval dudit flux d'eau que ladite première extrémité (111) lors de l'insertion dudit dispositif d'insertion d'eau ; dans lequel ladite première partie (100) et ladite troisième partie (120) comprennent des surfaces sensiblement planaires arrangées pour faire face à la direction du flux d'eau ; dans lequel ladite première partie (100) et ladite troisième partie (120) sont adaptées pour faire face au flux d'eau dans ledit tuyau d'eau circulaire et leurs extensions en longueur sont adaptées pour être arrangées de manière grosso modo perpendiculaire audit flux d'eau et/ou audit tuyau d'eau circulaire ;
- un canal de drainage d'eau (13) s'étendant à travers le corps principal (10) de l'orifice d'admission d'eau vers l'orifice d'évacuation d'eau (12c), adapté pour permettre à l'eau d'être drainée dudit tuyau d'eau circulaire, ledit corps principal (10) comprenant par ailleurs une dimension en largeur, entre la première surface (11a) et une seconde surface (11b) arrangée sur le côté opposé de la première surface (11a), par rapport à la direction souhaitée du flux d'eau, qui permet au dispositif d'être inséré dans le tuyau d'eau circulaire à travers des coutures ouvertes ou des joints ouverts dans ledit tuyau d'eau circulaire.

2. Le dispositif de drainage d'eau selon la revendication 1, dans lequel la distance, dans une direction parallèle au flux d'eau, entre ladite première extrémité (111) et ladite seconde extrémité (112) de ladite seconde partie (110) est d'au moins 10 cm.

3. Le dispositif de drainage d'eau selon l'un quelconque des revendications 1 ou 2, dans lequel la seconde partie (110) comprend un module courbe (15) adapté pour être fixé de manière amovible à ladite première partie (100) et ladite troisième partie (120), de telle sorte que ledit dispositif de drainage d'eau (1) peut être installé avec des modules à courbure différente (15) de manière à fournir différentes distances entre ladite première extrémité (111) et ladite seconde extrémité (112).

4. Le dispositif de drainage d'eau selon l'un quelconque des revendications 1 à 3, dans lequel ladite section en contact avec le tuyau (12) est une section amovible, ce par quoi ledit dispositif de drainage d'eau (1) peut être équipé de sections en contact avec le tuyau (12) comportant des bores (12a) qui sont adaptés à des profils de tuyaux d'eau circulaires de tailles différentes.

5. Le dispositif de drainage d'eau selon l'un quelconque des revendications 1 à 4, dans lequel le corps principal (10) comprend des moyens de fixation pour fixer ledit dispositif de drainage d'eau (1) sur ledit tuyau d'eau circulaire.

6. Le dispositif de drainage d'eau selon l'un quelconque des revendications 1 à 5, comprenant en outre un moyen d'évacuation d'eau raccordé audit orifice d'évacuation d'eau (12c) et adapté pour extraire l'eau dudit tuyau d'eau circulaire par le biais dudit canal de transfert d'eau (13) s'étendant à travers le corps principal (10) de l'orifice d'admission d'eau vers l'orifice d'évacuation d'eau (12c).

7. Le dispositif de drainage d'eau selon l'un quelconque des revendications 1 à 6, dans lequel ladite dimension en largeur varie entre approximativement 2 mm et 12 mm.

8. Utilisation du dispositif de drainage d'eau (1) selon l'une quelconque des revendications 1-7, afin d'obtenir une zone exempte d'eau dans un tuyau d'eau circulaire et ainsi permettre le soudage dans ladite zone exempt d'eau.
